Europäisches Patentamt

European Patent Office

Office européen des brevets

(19)

(11) **EP 1 577 796 A1**

(12) **EUROPEAN PATENT APPLICATION**

(43) Date of publication:
**21.09.2005 Bulletin 2005/38**

(51) Int Cl.⁷: **G06F 17/30**

(21) Application number: **05101969.3**

(22) Date of filing: **14.03.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **18.03.2004 US 803443**<br><br>(71) Applicant: **MICROSOFT CORPORATION**<br>**Redmond, WA 98052 (US)**<br><br>(72) Inventors:<br>• **Rathakrishnan, Balaji**<br> **98052, Redmond (US)** | • **Galindo-Legaria, Cesar A.**<br> **98052, Redmond (US)**<br>• **Blakeley, Jose A.**<br> **98052, Redmond (US)**<br>• **Seeliger, Oliver N.**<br> **98052, Redmond (US)**<br>• **Barrera, Renato**<br> **98052, Redmond (US)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Improved Query Optimizer Using Implied Predicates**

(57)    Improved query optimizer using implied predicates. The system facilitates allowing a query optimizing component to introduce into a query, extra predicates that facilitate the following: render the same results as the original query; are used as dictated by rules passed to the optimizing component - these rules specify wheth- er the new predicate is an equivalence (that will substitute the old predicate) or an implication (in which the old predicate is preserved); are considered as cost-based alternatives, and discarded if not useful; are tied to index utilization; and can consider both standard and multi- valued indices.

FIG. 3

**Description**

TECHNICAL FIELD

This invention is related to database systems, and more specifically, query optimization for such systems.

BACKGROUND OF THE INVENTION

Queries in database systems are posed in high level, declarative (non-procedural) languages that need to be translated into a procedural execution plan. The purpose of query optimization is to explore the manners in which this declarative request can be translated into procedural plans and to select the most efficient plan among those explored. The desired query execution plan can consist of a series of primitive database operators, and is typically selected according to a least estimated execution cost. One drawback of traditional query optimization systems involves a comparison on column values of a limited size. Database indexes have practical limits on the size of the fields used as search keys to the index. This presents a limitation on the columns that can be used as search keys of an index. In one implementation, indexes cannot have keys whose length is greater than 900 bytes. For example, columns of types VARCHAR(X), where X > 900 cannot be indexed. These data types are denoted as non-indexable types. Another drawback relates to computational complexity of the optimization process and the execution efficiency of the chosen plan. Furthermore, in addition to these hindrances, the standard approach to index selection is hampered by considering only predicates that compare a column proper against other values (in contrast to comparing, for example, a function of a column against other values).
What is needed is an improved query optimization mechanism to leverage indexes over expressions implied by query predicates.

SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.
The present invention disclosed and claimed herein, in one aspect thereof, is a system that facilitates allowing a query optimizing component to infer a simple comparison on an indexed column from another predicate condition. This occurs by introducing into a query, extra predicates that facilitate at least the following. The extra predicates render the same results as the original query, and are used as dictated by rules passed to the optimizing component. These rules specify whether the new predicate is an equivalence (that will substitute the old predicate) or an implication (in which the old predicate is preserved). The extra predicates are further considered as cost-based alternatives, and discarded if not useful. The predicates can also be tied to index utilization, and can be considered both standard and multi-valued indices.
In support thereof, the invention comprises a system that facilitates query optimization in a data repository, comprising a query component that receives a query to be processed against data of the data repository, which query includes an original predicate. The system also comprises a predicate component that transforms the original predicate into one or more new predicates that include at least one of an implied predicate, an equivalent predicate, and a residual predicate, either of the implied predicate or the equivalent predicate is processed against the data to return a best solution such that a total evaluation cost is significantly reduced.
In another aspect of the present invention, the system employs artificial intelligence in the form of a classifier to automate one or more aspects thereof
In another aspect thereof, a process is provided for estimating cardinality on the simple comparison thereby improving the accuracy. This is more cost effective than performing such estimations on complex conditions or predicates.
To the accomplishment of the foregoing and related ends, certain illustrative aspects of the invention are described herein in connection with the following description and the annexed drawings. These aspects are indicative, however, of but a few of the various ways in which the principles of the invention can be employed and the present invention is intended to include all such aspects and their equivalents. Other advantages and novel features of the invention will become apparent from the following detailed description of the invention when considered in conjunction with the drawings.

## EP 1 577 796 A1

BRIEF DESCRIPTION OF THE DRAWINGS

FIG. 1 illustrates a system in accordance with the present invention.
FIG. 2 illustrates a flow chart of one process of the present invention.
FIG. 3 illustrates a system in accordance with the present invention.
FIG. 4 illustrates a flow chart for a method of processing standard indices in accordance with the present invention.
FIG. 5 illustrates an initial operator tree and a final operator tree for a query with an implied predicate generated by a rewrite rule, according to the present invention.
FIG. 6 illustrates a block diagram of a system that processes multi-valued indices in accordance with the present invention.
FIG. 7 illustrates a flow chart of the method of processing multi-valued indices in accordance with the present invention.
FIG. 8 illustrates a system that employs artificial intelligent in accordance with the present invention.
FIG. 9 illustrates a block diagram of a computer operable to execute the disclosed architecture.
FIG. 10 illustrates a schematic block diagram of an exemplary computing environment in accordance with the present invention.

DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention can be practiced without these specific details. In other instances, well-known structures and devices are shown in block diagram form in order to facilitate describing the present invention.

As used in this application, the terms "component" and "system" are intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

As used herein, the term to "infer" or "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

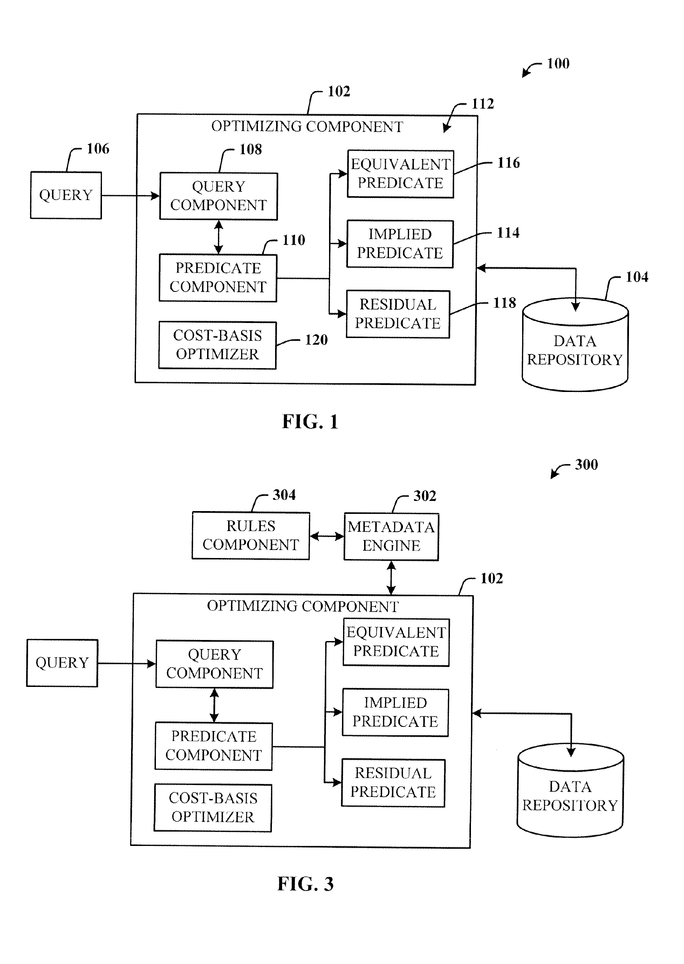

Referring now to FIG. 1, there is illustrated a system 100 in accordance with the present invention. There is provided an optimizing component 102 for optimizing searches against a data repository 104. The optimizing component 102 can be a query optimizer associated with the data repository 104, which optimizer is provided with enhancements in accordance with the present invention. The invention can be carried out by means of a portion of a DBMS (Database Management System) compiler called the optimizer. The optimizer is a process component of a DBMS compiler that initially evaluates a search query and generates key expressions for a DBMS Executor. The optimizing component 102 receives a query 106 that is to be processed against data of the data repository 104. The following description deals with a query that cannot be processed directly against the data repository, in that, search terms do not directly align with table data of the repository. Thus, further processing is needed to obtain a search result.

In support thereof, the optimizing component 102 further comprises a query component that 108 that receives the query 106. The query component 108 extracts one or more query predicates from the query 106 and communicates the one or more predicates to a predicate component 110. In this description, a predicate is an expression that asserts a fact about values. If the expression evaluates to TRUE, then the associated condition is satisfied. If the expression evaluates to FALSE, then the condition is not satisfied. Here, the predicate was initially applied against the data with no results. In accordance with the present invention, the predicate component 110 analyzes the unmatchable predicate, and introduces one or more new predicates 112 that significantly increase the prospect of a successful search. The one or more new predicates 112 can include one or any combination of the following: an implied predicate 114, an equivalent predicate 116, and a residual predicate 118.

The invention allows the optimizing component 102 to introduce into a query the one or more extra (or new) predicates 112 that facilitate the following: render the same results as the original query; can be used as dictated by rules passed to the optimizing component 102, which rules specify whether the new predicate is an equivalence (that will substitute the old predicate) or an implication (in which the old predicate is preserved); are considered as cost-based alternatives, and discarded if not useful; are tied to index utilization; and can consider both standard and multi-valued indices. A cost-basis optimizer 120 is included as part of the optimizing component to facilitate determining whether the one or more new predicates 112 reduce the cost associated with accomplishing a successful search.

Traditional limitations on the exploitability of indices can reduce the performance of queries. One workaround to solving this problem that still has shortcomings is the following. Suppose, for instance, that two columns of type VARCHAR(MAX) called $T_1.c\_charmax$ and $T_2.c\_charmax$ exist, respectively, on tables T1, T2. None of the columns is indexable, but there is an index on a computed column $T_1.c\_ccolumn$, that is computed by $HASH(T_1.c\_charmax)$. Since $T_1.c\_charmax = T_2.c\_charmax$ implies $HASH(T_1.c\_charmax) = HASH(T_2.c\_charmax)$, and thus, $T_1.c\_ccolumn = HASH(T_2.c\_charmax)$, the latter predicate could be explicitly included in the query, and the results of this explicitly rewritten query should be the two queries below, and should be equivalent in that each yields the same result.

| ORIGINAL QUERY | NEW EXPLICIT QUERY |
| --- | --- |
| SELECT $T_1.c\_charmax$<br>FROM $T_1$, $T_2$<br>WHERE $T_1.c\_charmax = T_2.c\_charmax$ | SELECT $T_1.c\_charmax$<br>FROM $T_1$, $T_2$<br>WHERE $T_1.c\_charmax = T_2.c\_charmax$<br>*AND $T_1.c\_ccolumn = HASH(T_2.c\_charmax)$* |

This approach indicates that when a column is of a non-indexable type, it may be possible to define an index on some function (*e.g.*, HASH, prefix) of the column whose type is indexable. Once such an index is defined, it becomes possible to take advantage of an index on T1.c_ccolumn. It has, however, several drawbacks. It goes against the "non-procedurality" of the query language, by forcing the programmer to write extra predicates based upon physical considerations. The plan involving the index on $T_1.c\_ccolumn$ may not be optimal, or the index on $T_1.c\_ccolumn$ may be dropped unbeknownst to the programmer, or there may be other ways of rewriting this predicate. In any of these cases, query execution will be saddled with evaluating an extra and unnecessary term.

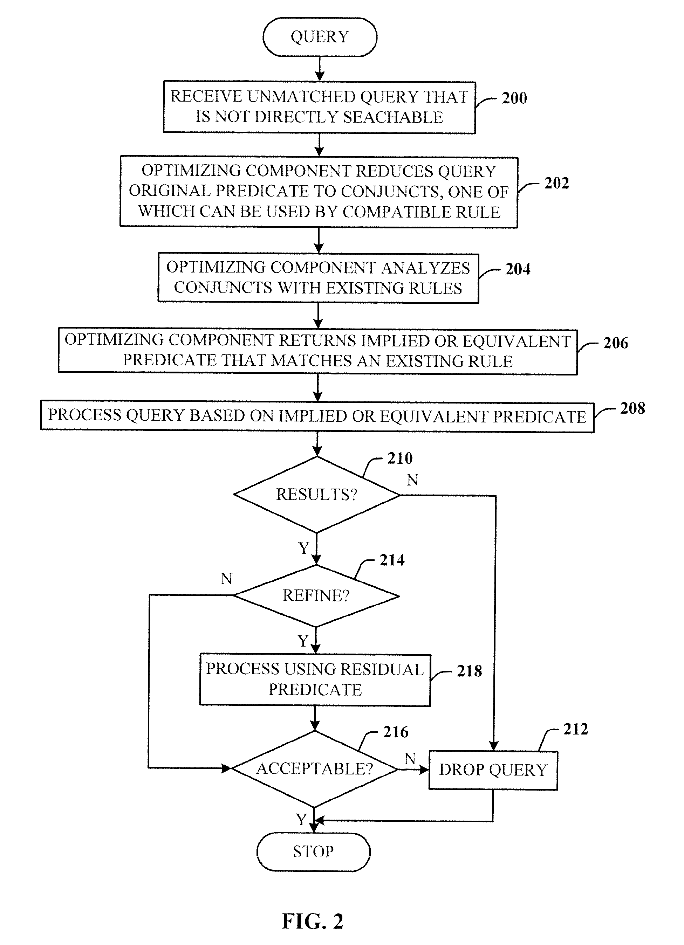

Referring now to FIG. 2, there is illustrated a flow chart of one process of the present invention. While, for purposes of simplicity of explanation, the one or more methodologies shown herein, *e.g.*, in the form of a flow chart, are shown and described as a series of acts, it is to be understood and appreciated that the present invention is not limited by the order of acts, as some acts may, in accordance with the present invention, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

At 200, an unmatched query is received that is not directly searchable. At 202, the optimizing component reduces the query predicate to conjuncts, one of which can potentially be used by an existing rule. At 204, the optimizing component analyzes the conjuncts with existing rules and chooses a most compatible rule. At 206, the optimizing component returns an implied or equivalent predicate that matches the most compatible rule. At 208, the query is processed based on the implied or equivalent rule. At 210, the search results are processed, and it is determined if the results are acceptable. If No, flow is to 212 to drop the query. The process then reaches a Stop block.

If the initial results are acceptable, flow is from 210 to 214 to determine if further refinement in the search is needed. If No, flow is to 216 to determine if the results are acceptable. If No, at 212, the query can be dropped. If Yes, the process ends at the Stop block. Alternatively, if further refinement is desired, flow is from 214 to 218, where a residual predicate is introduced and processed on the results returned for the implied or equivalent predicate. At 216, the results are checked for acceptability, as before.

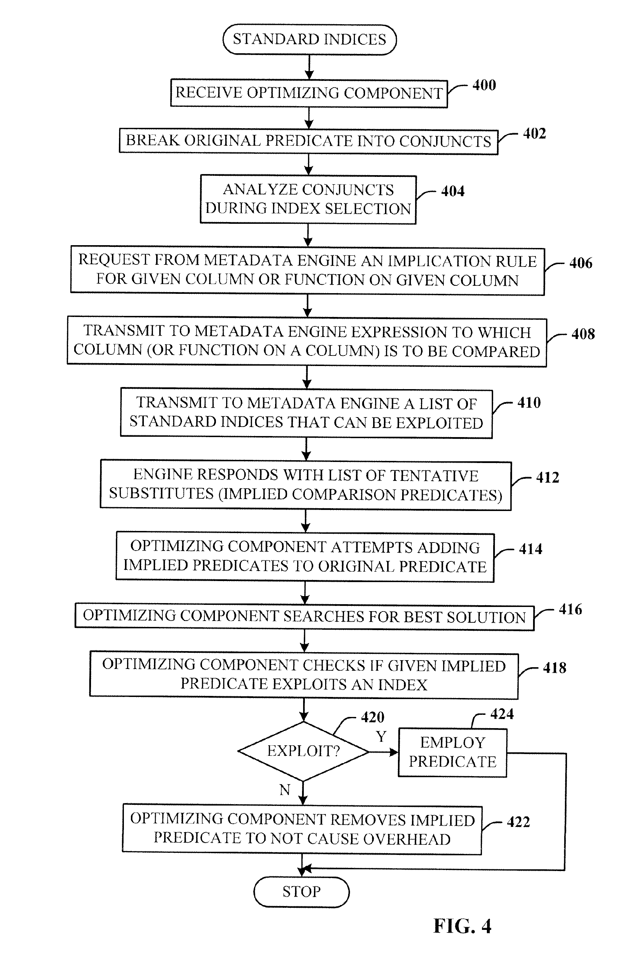

Referring now to FIG. 3, there is illustrated a system 300 in accordance with the present invention. System operation will be described in accordance with implication rules for standard indices. Here, the optimizing component 102 further interacts with a metadata engine 302 that has associated therewith a rules component 304 having a set of rules. The optimizing component 102 takes the query predicate and breaks it into conjuncts. The individual conjuncts set for comparison are analyzed during index selection. The optimizing component 102 requests the metadata engine 302 for the existence of an implication rule for a given column, or for a function on a given column. In order to provide this information, the optimizing component 102 sends the engine 302 the expression to which the column (or function on a column) is to be compared, and a list of standard indices that can be exploited. The metadata engine 302 accesses the rules component 304 and responds with a list of tentative substitutes (or implied comparison predicates). The optimizing component 102, in turn, attempts to add the implied predicates to the original predicate, and searches for the best index solution. If a given implied predicate exploits an index, the result is returned for further processing. However, if the implied predicate does not exploit an index, the optimizing component 102 removes it, so that it does not cause additional overhead.

Referring now to FIG. 4, there is illustrated a flow chart for a method of processing standard indices in accordance with the present invention. At 400, the optimizing component of the present invention is employed. At 402, the query original predicate is reduced to conjuncts. At 404, the conjuncts are analyzed during index selection. At 406, a request is placed or the metadata engine for an implication rule for a given column or function on a given column. At 408, before the response can be received from the engine, an expression is transmitted to the engine to which the column (or function on a column) can be compared. Additionally, at 410, a list of standard indices that can be exploited is transmitted to the engine. At 412, the engine responds with a list of tentative predicate substitutes (or implied comparison predicates). At 414, the optimizing component attempts to add the implied predicate(s) to the original predicate. At 416, the optimizing component searches of a best search solution. At 418, the optimizing component checks if given implied predicate exploits an index. At 420, the system determines if an index can be exploited. If Yes, at 424, the predicate is employed, and flow is to a Stop block. If, however, the index cannot be exploited, flow is to 422, where the optimizing component removes the implied predicate so as not to cause additional overhead. The process then reaches the Stop block.

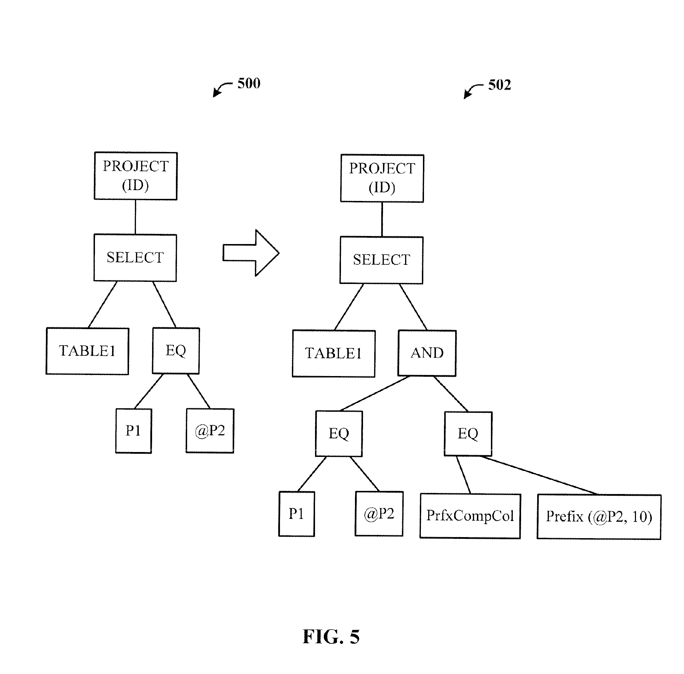

Referring now to FIG. 5, there is illustrated an initial operator tree 500 and a final operator tree 502 for a query with an implied predicate generated by a rewrite rule, according to the present invention. Consider in this example, that there is an implication rule for standard indices, called Rule1, that recites, if p1=@p then Prefix(p1, n) = Prefix (@p,n). Consider also, that there is a table created by:

```
CREATE TABLE Table1(id int, p1 varchar(500), PrfxCompCol as
        Prefix(p1,10), AnotherCompCol as AnotherFunct(p1)

CREATE INDEX IndexPrefix ON Table1(PrfxCompCol )
CREATE INDEX IndexAnother ON Table1(AnotherCompCol  )
```

Finally, consider the following query:

```
SELECT id FROM Table1 WHERE  p1 = @p2.
```

This is reflected in the initial operator tree 500 where Project (ID) branches to a Select node, which node braches to a Table1 node and EQ node. The EQ node further branches to P1 and @P2 nodes.

The generation of the implication for the predicate, $p1 = @p2$, is done in three steps. Firstly, explore the conjunct to determine if the conjunct above compares with either a non-indexable column of Table1, or a function or method of a column of Table1. The column in question ($p1$) will be called the candidate column. Secondly, search of indexed columns. Build a list of the indexed computed columns that utilize the candidate. If the candidate is indexable, also include those indices. In the example, this will yield that there are indices on columns *PrfxCompCol* and A*nother-CompCol*, since both exploit *p1*. The corresponding expressions are *Prefix (p1,10)* and *AnotherFunct (p1)*. Thirdly, search for substitutions. Use an ad-hoc metadata function to get the possible implied predicates, using the following parameters.

| Parameter | Value |
|---|---|
| cmpType | (an enumerator. Says that this is an equality comparison) |
| pexprAnalyzed | an expression corresponding to *Table1.p1* |
| pexprBound | the expression corresponding to *@p.1* |
| pdrgCid | an array with the table columns *PrfxCompCol* and *AnotherCompCol* |
| pdrgExprIdxCols | an array with the expressions for *PrfxCompCol* and *AnotherCompCol* |
| dbi | the database of *Table.p1* |

The metadata function will return zero or more expressions of implied predicates. In the example, it will be the single expression *PrfxCompCol= Prefix (@p2, 10)*. Note that this expression is the same as the expression in the "then" part of Rule1.

$$\text{If } p1=@p \text{ then } Prefix(p1, n) = Prefix(@p,n),$$

with the differences that *Prefix (p1,n)* has been changed by its equivalent column *PrfxCompCo1,* and that the right-side term of the rule has picked the length of the prefix (n=10) from computed column's expression.

This is reflected in the final operator tree 502 where the implied predicate includes the AND node, the right EQ node, and child node of PrfxCompCol and Prefix (@P2, 10). Note that PrfxCompCal (p1, 10), which corresponds to an indexed computed column, has been substituted by the corresponding computed column (PrfxComCol), Note also that Prefix (@p2, 10) has taken the length of the prefix (*i.e.*, 10) from the expression of PrfxComCol.

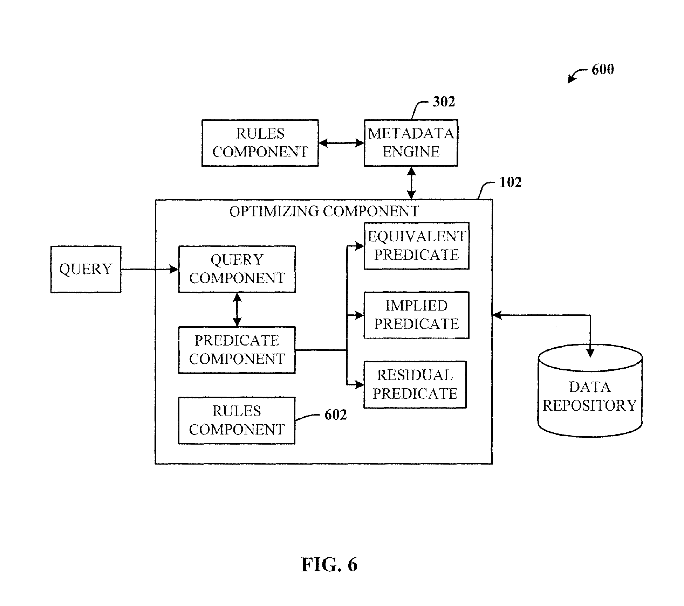

Referring now to FIG. 6, there is illustrated a block diagram of a system 600 that processes multi-valued indices in accordance with the present invention. Here, the optimizing component 102 includes a rules component 602 that facilitates introducing new, ad-hoc, exploratory rules for individual operators (*e.g.*, Select, Join, etc.). Inside these ad-hoc rules, the individual conjuncts will be analyzed. The optimizing component 102 will ask the metadata engine 302 for the existence of rules, passing the engine 302 information very similar to the above. That is, the optimizing component 102 sends the engine 302 the expression to which the column (or function on a column) is to be compared, and a list of multi-valued indices to be exploited. The metadata engine 302 responds with a list of tentative substitutes (with predicates involving nested queries). Finally, the optimizing component 102 includes the substitutes into the query and, after simplifying the new expression and remove nested queries, will generate new alternatives to the Select (or Join, etc.)

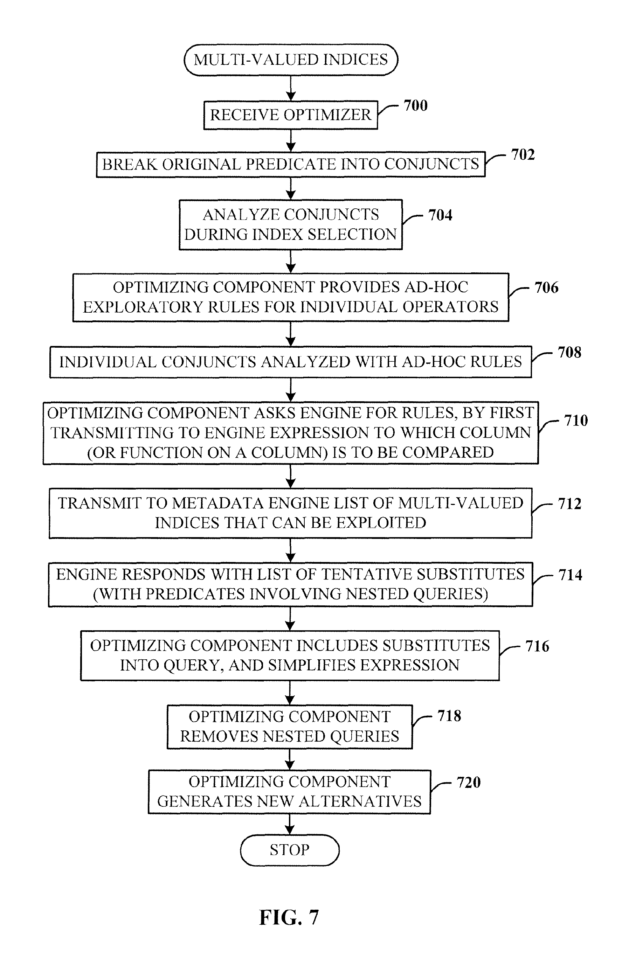

Referring now to FIG. 7, there is illustrated a flow chart of the method of processing multi-valued indices in accordance with the present invention. At 700, the optimizing component of the present invention is employed. At 702, the query original predicate is reduced to conjuncts. At 704, the conjuncts are analyzed during index selection. At 706, the optimizing component provides ad-hoc exploratory rules for individual operators. At 708, individual conjuncts are analyzed with the ad-hoc rules. At 710, the optimizing component also asks the metadata engine for the existence of rules. Before the response can be received from the engine, however, an expression is transmitted to the engine to which the column (or function on a column) can be compared. Additionally, at 712, a list of multi-valued indices that can be exploited is transmitted to the engine. At 714, the engine responds with a list of tentative predicate substitutes (with predicates that involve nested queries). At 716, the optimizing component includes substitutes into the query, and simplifies the expression. At 718, the optimizing component removes nested queries. At 720, the optimizing component generates new alternatives. The process then reaches the Stop block.

Applications dealing with complex data types such as spatial data types often have specialized indexing requirements which are not met by regular indexes. This invention enables users to build on top of a server's B-Tree indexes (*e.g.*, those associate with SQL Server) by relaxing certain aspects and assumptions about indexes, and allows users to create extended indexes. It also provides a way to map predicates or operators to expressions that use the extended index.

With respect to extended indices, applications like spatial, full-test, or temporal databases present ad-hoc indexing needs that cannot be readily satisfied by B-Trees, and that require the creation of some intermediate structures on which, in turn, standard indices can be built. Standard indices have at most one entry per table row. The applications above require more than one index-entry per row-the multiple entries being generated by a Table-Valued UDF. An extended index designed for Full Text may, for instance, use a Table-Valued UDF that, when applied to a text field, returns a table whose entries correspond to each of the words in the text. The definition of an extended query requires, in addition to the description of the column on which it is being created, the identification of the Table-Valued UDF using its generation and, sometimes, the specification of a set of application-dependent parameters to be included in the Tab UDF. Informally, extended indices are equivalent to indexing a table-valued computed column.

With respect to Query Rewrite rules, these are rules that (1) are connected to a comparison operator that involves a table column of a certain data type or a specific UDF and (2) prescribe a new Boolean expression that is either a consequence of (or equivalent to) the original comparison expression. The new expression may successfully exploit the existence of indices (extended or not), and will be used by the optimizer to generate alternatives. This, Query Rewrite rules apply either to UDFs or types, can be associated to standard or extended indices, and can represent either implications or equivalences.

The expression power of query-rewrite rule depends on whether they can be associated to a standard or an extended index. While an extended-index rewrite-rule can be any Boolean expression, a standard-index rule is much more limited.

Rewrite rules for standard indices can be included in the code of existing query optimizer rules that explore the utilization of index-lookup (and index-join) in Selects and Joins. Rewrite rules for extended indices can be considered by new exploratory rules in the query optimizer.

As indicated herein, the rules that explore the use of index-lookup in Selects and Joins use a class that breaks up the comparison expression of the Select (or Join) into conjuncts. Next, each native conjunct is analyzed to determine whether it can be used as a part of an index-lookup operation. Finally, all indices are analyzed and, for each index, lists the conjuncts that could be used in index-seek operations, or that are covered by the contents of an index. When the class finds an index-solution that involves a certain set of indices, it generates index expressions for each of the indices, keeping track of the conjuncts generated initially that can be exploited by each of these indices. At the end of the tasks, a residual predicate will be generated for all conjuncts that could not be taken care of by an index.

The list of extensions that comprise this invention are the following:

Index Extension scheme: Support is provided for creating an index extension scheme, and then allow the creation of indexes based on that extension scheme. The index extension scheme specifies the following: the key column data type corresponding to the data type being indexed; a set of parameters (which are typically domain-specific); and a table-valued function name that should be used by index generation and maintenance mechanisms to generate the index entries for each value of the column being indexed. The main relaxation of the assumptions with indexes here is that each column value being indexed may generate one or more index rows with one or more columns, hence the table-valued function to generate the index values.

Extended indexes: The capability to create indexes on columns using an index extension scheme that has been defined as above.

Transformation Rules: Indexes are useful to efficiently evaluate certain operators. The standard indexes allow efficient evaluation of comparison operations. Similarly, extended indexes can be used to efficiently evaluate domain-specific operators or comparisons that are applicable to complex data types. In order to support this, SQL Server supports the ability to map a predicate (or Boolean-valued function) against the indexed data type into an expression that can be evaluated using the indexed values (*i.e.*, the result of the table-valued function applied on the indexed value).

In terms of extensibility, this invention is limited by what can be expressed by (i) mapping the indexed value into a tabular value and (ii) mapping the predicate to an alternate tabular expression expressible in SQL against the corresponding tabular value.

Extended Indexes

Conventional secondary indexes have the following sets of columns:

- The columns being indexed (*e.g.*, IC) and the set of columns that uniquely identify the row in the base table to which this index row corresponds. There is one row in the index for each row of the base table.
- Columns that uniquely identify the base-row either using the clustering key columns of the base table or using a physical identifier of the base-row for tables without clustered indexes.

In extended indexes, the former set, *i.e.*, columns being indexed are different in the sense that they are generated using a user-specified function of the column(s) being indexed. Further, since the user-specified function is a table-valued function, there could be more than one row in the index for each row of the base table.

Creating/Maintaining Extended Index Schemes

Creating extended indexes is a two-step process. The first step is to create an index extension scheme that encapsulates the following definitions:

- The data type of the column being indexed.
- Additional parameters that are useful in creating the index that are typically domain-specific.
- The table-valued function that should be used to generate the index and the mapping of the index-inputs (the column being indexed and the additional parameters) to the parameters of the table-valued function.
- The columns of the table-valued index that should be indexed in addition to the main index the query optimizer creates on the primary key columns of the base table.

A new CREATE INDEX EXTENSION statement is used for creating index extensions.

Once, the index extension scheme is created, actual indexes, which are nothing but instances of this extension scheme, can be created through an enhancement to the CREATE INDEX statement.

The following represents syntax and semantics for the CREATE INDEX EXTENSION statement.

```
CREATE INDEX EXTENSION [extension_schema.]extension_name
FOR ({@column_param_name
[column_type_schema.]column_data_type}[,…] )
WITH PARAMETERS ( { @param_name
[param_type_schema.]param_data_type }
      [,…]   )
USING [table_function_schema.]table_function_name ( {@arg_name
[,…] )
[ON (column_name [,…])]
```

Rules

column_param_name specifies the primary index parameter which is the data value that is being indexed. column_data_type is the data type of this parameter. column_data_type can be any of the scalar data types supported by SQL Server (except timestamp) or a user-defined type. column_type_schema can be optionally specified for UDTs.
@param_name specifies the names of additional parameters and param_data_type specifies their corresponding data types. The specified data types can either be scalar type (except timestamp) supported by SQL Server or a user-defined type.
[table_function_schema.]table_function_name should specify an existing table-valued function in the same database where the index extension is being created. This table-valued function is deterministic.

All the parameter names in the argument-list of the USING clause come from the list of parameter names defined in the FOR clause (as @column_param_name) or the WITH PARAMETERS clause (as @param_name). This sets up the binding as to how the table-valued function is invoked, given the column data value and the additional parameters of the index extension.
The creation of the index extension scheme generates an implicit schema binding on the table-valued function. Hence the table-valued function cannot be dropped or altered as long as there is an index extension scheme that uses it exists.
The list of columns specified after the ON clause should be column names returned by the result of the table-valued function specified. This list specifies an additional index on these columns in addition to indexes always created on the primary-keys of the base-table by the query processor.

Example 1

For the spatial case in the spatial data type spec.

```
-- first create table-valued function

CREATE FUNCTION st_KeyGen(@g dbo.Geom, @minx int, @miny int,
@maxx int, @maxy int, @max_tiles int, @max_depth int)
RETURNS TABLE (key nvarchar(4000))
EXTERNAL NAME spatialAssembly:spatialfunctions::st_KeyGen

-- now create index extension scheme using this table-valued
function

CREATE INDEX EXTENSION SpatialIndexScheme FOR (@p dbo.Geom)
WITH PARAMETERS @minx int, @miny int, @maxx int, @maxy int,
      @max_tiles int, @max_depth int)
USING dbo.st_KeyGen(@p, @minx, @miny, @maxx, @maxy,
      @max_tiles, @max_depth)
ON (key)
```

Dropping Index Extension Schemes

Syntax

```
DROP [[extension_schema.]extension_name
```

Rules

If there are any extended indexes in the database that are based on this index extension scheme, then it cannot be dropped.

Creating/Managing Extended Indexes

Once an index extension scheme is created, one or more indexes can be created using the index extension scheme thus created. The CREATE INDEX specifies the column being indexed and also supplies the values of the additional parameters to be supplied to the table-valued function specified as part of the index extension scheme.

Syntax

```
CREATE [ UNIQUE ] [ CLUSTERED | NONCLUSTERED ] INDEX index_name
    ON { table | view } ( column [ ASC | DESC ] [ ,… ] )
[ USING [index_extension_schema].index_extension_name ]

[ WITH  index_option  [ ,… ] ]
[ ON filegroup ]

index_option :: =
    { PARAMETERS = ( param_value [,… ] )

      PAD_INDEX |
      FILLFACTOR = fillfactor |
      IGNORE_DUP_KEY |
      DROP_EXISTING |
      STATISTICS_NORECOMPUTE |
      SORT_IN_TEMPDB
    }
```

Rules

The data type of the column should be the same as the data type of the @column_param_name of the index extension.
The parameter values supplied in the PARAMETERS index_option are T-SQL literals and should have a one-to-one correspondence in terms of order and data type compatibility with the parameters specified in the PARAMETERS clause of the corresponding index extension.
Scalar UDFs (User-Defined Functions) can also be permitted in the index extension scheme, in which case the value indexed will be the result of that UDF instead of the column value itself

Implementation Notes

The index can be generated by creating and maintaining an indexed view as if the following statements were

executed:

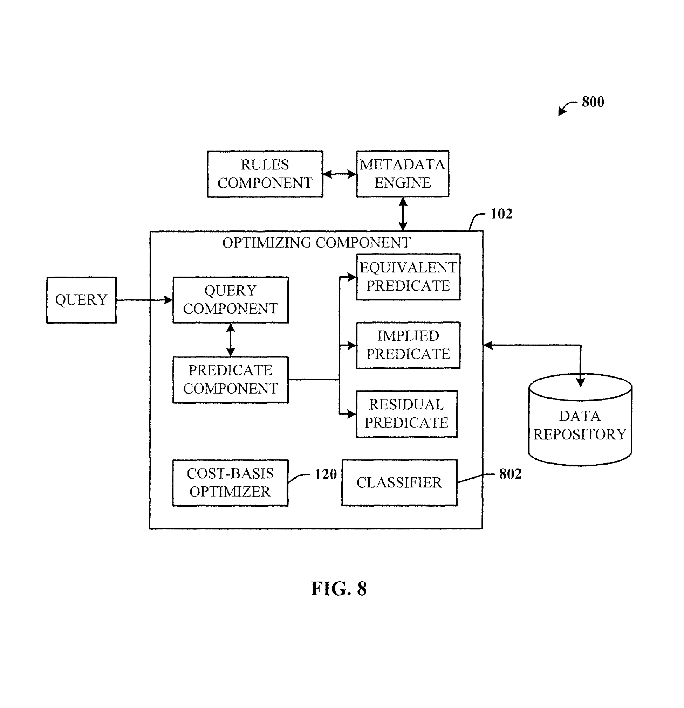

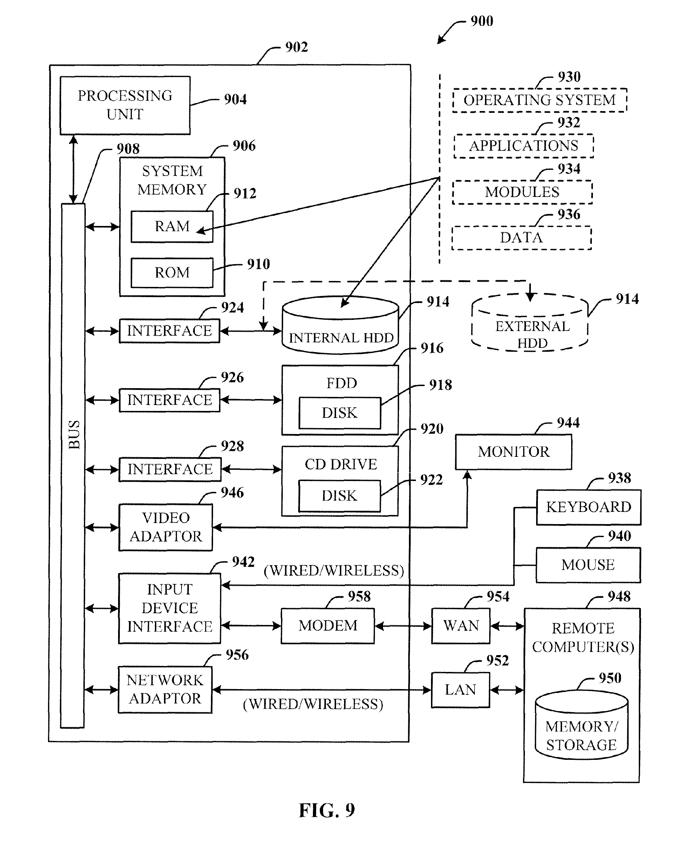

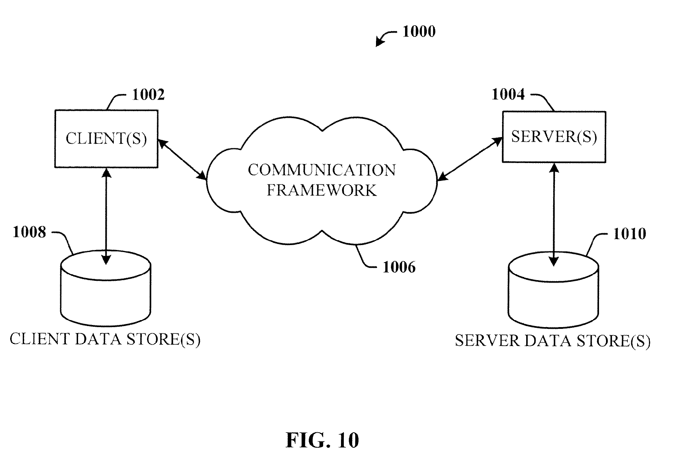

```
CREATE VIEW <system-generated-view>
AS
SELECT <primary-key-columns-of-base-table>,  i.*
FROM <base-table>  APPLY (select * from <table-valued-
function>(<index-col>,….)  i)
```

The above view will be indexed using a non-unique clustered index.

```
CREATE INDEX <system-generated-index-name> /* non-unique index */
ON <system-generated-view> (<primary-key-columns-of-t>)
WITH <supplied-options-in-original-create-index>
```

Given this <system-generated-view>, note that the following equivalence is true:

```
<table-valued-function>(X) =
SELECT <columns-of-table-valued-function>
FROM <system-generated-view>
WHERE v.<primary-key> = t.<primary-key>
```

where t. <primary-key> is the reference to the primary key of the base-table.

In addition to the above index, the query processor will also create an additional index as specified by the ON clause.

Example 1 (cont'd.)

```
CREATE TABLE Suppliers (id int PRIMARY KEY, name nvarchar(60),
coverage dbo.Geom)

CREATE INDEX spatialindex ON Suppliers (coverage)
USING SpatialIndexScheme
WITH PARAMETERS = (0,0,100,100,5,5),
     FILLFACTOR = 60
```

As per above implementation notes, this will cause SQL Server to generate the following indexed view:

```
CREATE VIEW spatialindex
AS
SELECT id, i.*
FROM Suppliers APPLY dbo.st_KeyGen(s.coverage, 0,0,100,100,5,5) i

CREATE CLUSTERED INDEX <internal-name>
ON internalview(ID)
WITH FILLFACTOR=60
```

Dropping Extended Indexes

Extended indexes can be dropped using the DROP INDEX statement as it exists today as long as there are no rules that use that index.

Implication/Equivalence Rules

Rules are supported that specify the logical implication or equivalence of a complex predicate function in terms of another Boolean-valued expression, that uses the same table-valued function that has been used to create an extended index as above. In this case, the Query Processor (QP) can evaluate this Boolean-expression using the precomputed table-valued function (as persisted in the extended index). The original predicate function needs to be evaluated only if the rule is an implication rule and if the Boolean-valued expression is true.

Syntax

```
CREATE RULE [rule_schema.]rule_name
TYPE { EQUIVALENCE | IMPLICATION }
FOR [original_function_schema.]original_function_name
    ( argument_list )
WITH INDEX TYPE
    [index_extension_schema.]index_extension_name ON
@index_argument
AS [(] boolean_expression [)]

argument_list::=
    @argument_name [ ,… ]
```

Rules

A scalar user-defined function as specified by [*original_function_schema.*]*original_function_name* should exist in the current database.

*@index_argument* should match one of the arguments in *argument_list*.
*boolean-expression* can contain references to arguments (identifiers with an '@' prefix) which should match either the arguments in *argument_list* or the parameters (defined in the PARAMETERS clause) of the index extension scheme specified.
*boolean_expression* should reference the table-valued-function that is used by the specified *index_extension_scheme*.

If TYPE EQUIVALENCE is specified, then the rule expresses a complete equivalence and the query optimizer need not call the original function at the end. If TYPE IMPLICATION is specified, the query processor needs to call the original function at the end even if the specified boolean-expression is true.

<u>Query-Rewrite Logic</u>

The QP uses the implication rule for a given invocation of a user-defined scalar function if the following conditions are met. An extended index of the type specified in the WITH INDEX TYPE clause exists for the column that is an argument of this function and the argument's position matches that specified by the *@index_argument*.

If the implication rule is used it rewrites the function invocation as follows:

*original-function-name* (...,*T.col*,...)

where T.col is the indexed column on which an extended index exists, then the above function is rewritten as the *boolean_expression* corresponding to the rule, where each occurrence of the table-valued function inside *boolean_expression* is replaced by the following table expression against the corresponding extended index:

```
(SELECT * FROM <IndexedView> i
   WHERE i.<Primary Key> = T.<Primary Key>)
```

The query optimizer will consider all the alternatives individually (and not use more than one in the same substitution) and pick the cheapest one.

<u>Example 1 (cont'd.)</u>

```
CREATE RULE Spatialrule
TYPE IMPLICATION
FOR dbo.st_Intersects(@p1 dbo.Geom, @p2 dbo.Geom)
WITH INDEX TYPE SpatialIndexScheme
AS
EXISTS (SELECT *
        FROM st_keyGen(@p1,@minx,@miny,@maxx,@maxy,@max_tiles,
                                        @max_depth) i  JOIN
            GetRanges(stBoundingBox(@p2,@max_tiles,@max_depth)) r ON
                i.key BETWEEN (r.keymin and r.keymax)
        UNION ALL
        SELECT *
            FROM st_keyGen(@p1,@minx,@miny,@maxx,@maxy,@max_tiles,
                                        @max_depth) i JOIN
                GetAncestors(stBoundingBox(@p2, @max_tiles,
                                        @max_depth) r ON
                                            i.key = r.key
        )
```

User query:

```
SELECT *
FROM Suppliers s
WHERE st_Intersects(s.Coverage, @inputArea)
```

is rewritten as

```
SELECT *
FROM Suppliers s
WHERE EXISTS (
            SELECT *
            FROM (SELECT * FROM spatialIndex i
                  WHERE i.ID=s.ID) t1
                  JOIN GetRanges(stBoundingBox(@p2,5,5)) r ON
                  t1.key BETWEEN (r.keymin and r.keymax)
            UNION ALL
            SELECT *
            FROM (SELECT * FROM spatialIndex i
                  WHERE i.ID=s.ID) t2
            JOIN GetAncestors(stBoundingBox(@a_geometry, 5,5) r ON
                                          t2.key = r.key
                  )
        AND st_Intersects(s.Coverage, @InputArea)
```

Example 2

Consider a full-text indexing scheme that relies on indexing the results of a table-valued function *ft_IndexGentextval*) and returns a set of rows of the form (*word*, *frequency, location)* where there is an entry for each occurrence of each *word* in *textval*. Each row contains information about the *word*, its *frequency*, which is the number of occurrences in the document and *location,* which is an offset in textval where that occurrence of word is located. The table-valued function can be created as follows:

```
CREATE FUNCTION ft_IndexGen(@textval nvarchar(MAX))
RETURNS TABLE (word nvarchar(300), frequency int, location int)
EXTERNAL NAME FullTextLib:IndexGen::ft_IndexGen
```

The index extension will be created as follows:

```
CREATE INDEX EXTENSION FulltextIndexScheme
FOR (@p nvarchar(MAX))
USING dbo.ft_IndexGen(@p)
```

Consider the predicate CONTAINS(@textval, <phrase>) which returns true only if all the words in <phrase> appear at least once in @textval. The logic of the following rule is that CONTAINS(@textval, @phrase) is TRUE only if there are no words in @phrase that do not occur in @textval, as well.

```
CREATE RULE ftRule
TYPE EQUIVALENCE
FOR dbo.CONTAINS(@p1 nvarchar(MAX), @p2 nvarchar(300))
WITH INDEX TYPE FulltextIndexSchema ON @p1
AS
        NOT EXISTS (
            SELECT word
            FROM ft_IndexGen(@p2) i2
            WHERE i2.word NOT IN
                  (SELECT word FROM ft_IndexGen(@p1))
            )
```

Now consider the table Candidates(CandidateID, LastName, FirstName, ContactPhone, Resume) and that the Resume column has an index created on it using the FulltextIndexScheme.

A query that looks for all Candidates with the words 'distributed database' in their resume is the following:

```
SELECT *
FROM Candidates
WHERE dbo.CONTAINS(Resume, 'Distributed Database')
```

The above query, given the extended index and the implication rule on the CONTAINS function will be re-written by the optimizer as follows:

```
SELECT *
FROM Candidates c
WHERE NOT EXISTS (
            SELECT word
            FROM ft_IndexGen('Distributed Database') i2
            WHERE i2.word NOT IN
                  (SELECT word
                   FROM (SELECT * FROM ftIndex i
                         WHERE i.CandidateID = c.CandidateID))
                  )
```

Referring now to FIG. 8, there is illustrated a system 800 that employs artificial intelligent component (a classifier 802) in accordance with the present invention. The subject invention (*e.g.*, in connection with selection) can employ various artificial intelligence based schemes for carrying out various aspects of the subject invention. For example, a process for determining how and when to weight implication rules according to the user can be facilitated *via* an automatic classifier system and process. Such a process can be enforced by using constraints.

A classifier is a function that maps an input attribute vector, $x = (x1, x2, x3, x4, xn)$, to a confidence that the input belongs to a class, that is, $f(x) = confidence(class)$. Such classification can employ a probabilistic and/or statistical-based analysis (*e.g.*, factoring into the analysis utilities and costs) to prognose or infer an action that a user desires to be automatically performed.

A support vector machine (SVM) is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, *e.g.*, naïve Bayes, Bayesian networks, decision trees, and probabilistic classification models providing different patterns of independence can be employed. Classification as used herein also is inclusive of statistical regression that is utilized to develop models of priority.

As will be readily appreciated from the subject specification, the subject invention can employ classifiers that are explicitly trained *(e.g., via* a generic training data) as well as implicitly trained (*e.g.*, *via* observing user behavior, receiving extrinsic information). For example, SVM's are configured *via* a learning or training phase within a classifier constructor and feature selection module. Thus, the classifier(s) can be used to automatically perform a number of functions. For example, independent of whether the application is to data types that are non-indexable types, the classifier 802 can be employed to determine that if the original predicate is too complex or expensive to run, as determined alone or in combination with the cost-basis optimizer 120, but the implied to equivalent predicate is much cheaper to run, the classifier 802 can first evaluate the search and results using the implied or equivalent predicates. Thereafter, the complex search can be refined accordingly, before running the more complex or expensive search.

The classifier 802 can also be employed to use additional information on selectivity and/or cardinality estimation. Thus, the implication rules can be used to narrow the search, but also by using estimations, *e.g.*, cardinality estimations. These estimations can then be dropped thereafter to not be executed.

The implied predicate can be used to improve cardinality estimation. In the end, this leads to a more efficient execution plan. Accurate cardinality estimation further support estimating a more reliable execution cost, and therefore, choose a more robust execution plan. For example, if by the implication rule it is known that P1 is equivalent to P2, and P2 is simpler to estimate, then robustness has been gained. Moreover, if P1 implies P2, but is not equivalent to it, then by estimating the rows satisfying P2, an upper bound can be determined on the rows that satisfy P1. This is valuable information as well.

The classifier 802 can also be employed to make inferences based on parameters related to the type of data being searched, the time of the search, the size of data being searched, whether the data is distributed or not, and the complexity of the query expression, to name but only a few.

Referring now to FIG. 9, there is illustrated a block diagram of a computer operable to execute the disclosed architecture. In order to provide additional context for various aspects of the present invention, FIG. 9 and the following discussion are intended to provide a brief, general description of a suitable computing environment 900 in which the various aspects of the present invention can be implemented. While the invention has been described above in the general context of computer-executable instructions that may run on one or more computers, those skilled in the art will recognize that the invention also can be implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the invention may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and nonvolatile media, removable and non-removable media. By way of example, and not limitation, computer readable media can comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

With reference again to FIG. 9, there is illustrated an exemplary environment 900 for implementing various aspects of the invention that includes a computer 902, the computer 902 including a processing unit 904, a system memory 906 and a system bus 908. The system bus 908 couples system components including, but not limited to, the system memory 906 to the processing unit 904. The processing unit 904 can be any of various commercially available processors. Dual microprocessors and other multi-processor architectures may also be employed as the processing unit 904.

The system bus 908 can be any of several types of bus structure that may further interconnect to a memory bus (with or without a memory controller), a peripheral bus, and a local bus using any of a variety of commercially available bus architectures. The system memory 906 includes read only memory (ROM) 910 and random access memory (RAM) 912. A basic input/output system (BIOS) is stored in a non-volatile memory 910 such as ROM, EPROM, EEPROM, which BIOS contains the basic routines that help to transfer information between elements within the computer 902, such as during start-up. The RAM 912 can also include a high-speed RAM such as static RAM for caching data.

The computer 902 further includes an internal hard disk drive (HDD) 914 (*e.g.*, EIDE, SATA), which internal hard disk drive 914 may also be configured for external use in a suitable chassis (not shown), a magnetic floppy disk drive (FDD) 916, (*e.g.*, to read from or write to a removable diskette 918) and an optical disk drive 920, (*e.g.*, reading a CD-ROM disk 922 or, to read from or write to other high capacity optical media such as the DVD). The hard disk drive 914, magnetic disk drive 916 and optical disk drive 920 can be connected to the system bus 908 by a hard disk drive interface 924, a magnetic disk drive interface 926 and an optical drive interface 928, respectively. The interface 924 for external drive implementations includes at least one or both of Universal Serial Bus (USB) and IEEE 1394 interface technologies.

The drives and their associated computer-readable media provide nonvolatile storage of data, data structures, computer-executable instructions, and so forth. For the computer 902, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the present invention.

A number of program modules can be stored in the drives and RAM 912, including an operating system 930, one or more application programs 932, other program modules 934 and program data 936. All or portions of the operating system, applications, modules, and/or data can also be cached in the RAM 912.

It is appreciated that the present invention can be implemented with various commercially available operating systems or combinations of operating systems.

A user can enter commands and information into the computer 902 through one or more wired/wireless input devices, *e.g.*, a keyboard 938 and a pointing device, such as a mouse 940. Other input devices (not shown) may include a microphone, an IR remote control, a joystick, a game pad, a stylus pen, touch screen, or the like. These and other input devices are often connected to the processing unit 904 through an input device interface 942 that is coupled to the system bus 908, but can be connected by other interfaces, such as a parallel port, an IEEE 1394 serial port, a game port, a USB port, an IR interface, etc.

A monitor 944 or other type of display device is also connected to the system bus 908 *via* an interface, such as a video adapter 946. In addition to the monitor 944, a computer typically includes other peripheral output devices (not shown), such as speakers, printers etc.

The computer 902 may operate in a networked environment using logical connections *via* wired and/or wireless communications to one or more remote computers, such as a remote computer(s) 948. The remote computer(s) 948 can be a workstation, a server computer, a router, a personal computer, portable computer, microprocessor-based entertainment appliance, a peer device or other common network node, and typically includes many or all of the elements described relative to the computer 902, although, for purposes of brevity, only a memory storage device 950 is illustrated. The logical connections depicted include wired/wireless connectivity to a local area network (LAN) 952 and/or larger networks, *e.g.*, a wide area network (WAN) 954. Such LAN and WAN networking environments are commonplace in offices, and companies, and facilitate enterprise-wide computer networks, such as intranets, all of which may connect to a global communication network, *e.g.*, the Internet.

When used in a LAN networking environment, the computer 902 is connected to the local network 952 through a wired and/or wireless communication network interface or adapter 956. The adaptor 956 may facilitate wired or wireless communication to the LAN 952, which may also include a wireless access point disposed thereon for communicating with the wireless adaptor 956. When used in a WAN networking environment, the computer 902 can include a modem 958, or is connected to a communications server on the LAN, or has other means for establishing communications over the WAN 954, such as by way of the Internet. The modem 958, which can be internal or external and a wired or wireless device, is connected to the system bus 908 *via* the serial port interface 942. In a networked environment, program modules depicted relative to the computer 902, or portions thereof, can be stored in the remote memory/storage device 950. It will be appreciated that the network connections shown are exemplary and other means of establishing a communications link between the computers can be used.

The computer 902 is operable to communicate with any wireless devices or entities operatively disposed in wireless communication, *e.g.*, a printer, scanner, desktop and/or portable computer, portable data assistant, communications satellite, any piece of equipment or location associated with a wirelessly detectable tag (*e.g.*, a kiosk, news stand, restroom), and telephone. This includes at least Wi-Fi and Bluetooth™ wireless technologies. Thus, the communication can be a predefined structure as with conventional network or simply an ad hoc communication between at least two devices.

Wi-Fi, or Wireless Fidelity, allows connection to the Internet from a couch at home, a bed in a hotel room or a conference room at work, without wires. Wi-Fi is a wireless technology like a cell phone that enables such devices, *e.g.*, computers, to send and receive data indoors and out; anywhere within the range of a base station. Wi-Fi networks use radio technologies called IEEE 802.11 (a, b, g, etc.) to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, with an 11 Mbps (802.11b) or 54 Mbps (802.11a) data rate or with products that contain both bands (dual band), so the networks can provide real-world performance similar to the basic 10BaseT wired Ethernet networks used in many offices.

Referring now to FIG. 10, there is illustrated a schematic block diagram of an exemplary computing environment 1000 in accordance with the present invention. The system 1000 includes one or more client(s) 1002. The client(s) 1002 can be hardware and/or software (*e.g.*, threads, processes, computing devices). The client(s) 1002 can house cookie(s) and/or associated contextual information by employing the present invention, for example. The system 1000 also includes one or more server(s) 1004. The server(s) 1004 can also be hardware and/or software (*e.g.*, threads, processes, computing devices). The servers 1004 can house threads to perform transformations by employing the present invention, for example. One possible communication between a client 1002 and a server 1004 can be in the form of a data packet adapted to be transmitted between two or more computer processes. The data packet may include a cookie and/or associated contextual information, for example. The system 1000 includes a communication framework 1006 (*e.g.*, a global communication network such as the Internet) that can be employed to facilitate communications between the client(s) 1002 and the server(s) 1004.

Communications cab be facilitated *via* a wired (including optical fiber) and/or wireless technology. The client (s) 1002 are operatively connected to one or more client data store(s) 1008 that can be employed to store information local to the client(s) 1002 (*e.g.*, cookie(s) and/or associated contextual information). Similarly, the server(s) 1004 are operatively connected to one or more server data store(s) 1010 that can be employed to store information local to the servers 1004.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1. A system that facilitates query optimization in a data repository, comprising:

   a query component that receives a query to be processed against data of the data repository, which query includes an original predicate; and
   a predicate component that processes the original predicate into one or more new predicates that include an implied predicate, the implied predicate processed against the data to return a best solution such that a total evaluation cost is significantly reduced.

2. The system of claim 1, the predicate component processes the original predicate to obtain an equivalent predicate.

3. The system of claim 1, the predicate component processes the original predicate to obtain a residual predicate.

4. The system of claim 1, the query is a previously processed query that is unmatched.

5. The system of claim 1, the one or more new predicates can be used for standard indices and multi-valued indices.

6. The system of claim 1, the one or more new predicates are considered cost-based alternatives that are utilized only of the evaluation cost is reduced, otherwise, they are discarded.

7. The system of claim 1, the one or more new predicates are associated with index utilization.

8. The system of claim 1, the query is processed against a data type that is a non-indexable type.

9. A data repository optimizer according to the system of claim 1.

10. A system that facilitates query optimization in a data repository, comprising:

    a query component that receives a query to be processed against data of the data repository, which query includes an original predicate; and
    a predicate component that processes the original predicate into one or more new predicates that include at least one of an implied predicate, an equivalent predicate, and a residual predicate, either of the implied predicate or the equivalent predicate is processed against the data to return a best solution such that a total evaluation cost is significantly reduced.

**11.** The system of claim 10, the implied predicate and the equivalent predicate are considered cost-based alternatives that are discarded if the evaluation cost is not reduced.

**12.** A computer readable medium having stored thereon computer executable instructions for carrying out the system of claim 10.

**13.** A server that employs the system of claim 10.

**14.** The system of claim 10, the predicate component generates an expression using the one or more new predicates, which expression is used to obtain an implication rule that is associated with at least one of a given column and a function on a given column.

**15.** The system of claim 14, the predicate component requests the implication rule in response to providing the expression to which at least one of the given column and the function on a given column is to be compared, and a list of standard indices that can be exploited.

**16.** The system of claim 10, the one or more new predicates is analyzed during index selection.

**17.** The system of claim 10, further comprising a classifier that facilitates automating one or more feature thereof by makes an inference based on one or more parameters related to at least one of a cost-basis evaluation, cardinality estimation, and complexity of the query.

**18.** The system of claim 10, the total evaluation cost includes employing the one or more new predicates only if optimization is increased.

**19.** The system of claim 10, the query is one for which there is no exact match between search predicates and index keys.

**20.** The system of claim 10, the implied predicate exactly matches an index key.

**21.** A computer-readable medium having computer-executable instructions for performing a method for optimizing a search query, the method comprising:

receiving a query for whose original predicate there is no exact match to an index key;
reducing the original predicate into at least one of an implied predicate and an equivalent predicate;
processing at least one of the implied predicate and the equivalent predicate against data of a data repository to obtain search results; and
analyzing the search results for a best solution.

**22.** The computer-readable medium of claim 21, further comprising instructions for requesting an implication rule for a column or function on a column.

**23.** The computer-readable medium of claim 21, further comprising instructions for transmitting at least one of an expression to which a column or function on a column is to be compared and a list of standard indices or multi-valued indices that could be exploited.

**24.** The computer-readable medium of claim 21, further comprising instructions for removing the implied predicate if the implied predicate does not exploit one of the standard or multi-value indices.

**25.** The computer-readable medium of claim 21, further comprising instructions for employing a new ad-hoc exploratory rule for an individual operator of the original predicate.

**26.** The computer-readable medium of claim 25, further comprising instructions for analyzing at least one of the implied predicate and the equivalent predicate with the exploratory rule.

**27.** The computer-readable medium of claim 21, further comprising instructions for performing the acts of:

requesting a list of tentative substitutes with predicates that involve nested queries;

including the substitutes into the query to form a new expression;
simplifying the new expression;
removing nested queries; and
generating new alternatives for the search.

28. The computer-readable medium of claim 21, further comprising instructions for processing the original predicate to generate a residual predicate the refines the search.

29. The computer-readable medium of claim 28, further comprising instructions for processing the residual predicate after the act of processing at least one of the implied predicate and the equivalent predicate.

30. The computer-readable medium of claim 21, further comprising instructions for adding the implied predicate to the original predicate and searching for the best solution.

31. The computer-readable medium of claim 21, further comprising instructions for replacing the original predicate with the equivalent predicate and searching for the best solution.

32. The computer-readable medium of claim 21, further comprising instructions for performing a cardinality estimation using at least one of the implied predicate and the equivalent predicate.

33. The computer-readable medium of claim 21, further comprising instructions for creating an index based on an index extension scheme, which scheme includes at least one of,
    providing a key column of a data type that corresponds to a data type being indexed;
    providing a set of parameters; and
    providing a table-valued function name that is used to generate an index entry for a value of the column being indexed.

34. A system that facilitates query optimization in a data repository; comprising:

    means for receiving a query for whose original predicate there is no exact match to an index key;
    means for reducing the original predicate into at least one of an implied predicate and an equivalent predicate;
    means for requesting an implication rule for a column or function on a column;
    means for transmitting at least one of an expression to which a column or function on a column is to be compared and a list of standard indices or multi-valued indices that could be exploited.
    means for processing at least one of the implied predicate and the equivalent predicate against data of a data repository to obtain search results;
    means for analyzing the search results for a best solution; and
    means for removing the implied predicate if the implied predicate does not exploit one of the standard or multi-value indices.

35. The system of claim 34, further comprising means for employing a new ad-hoc exploratory rule for an individual operator of the original predicate.

36. The system of claim 34, further comprising means for analyzing at least one of the implied predicate and the equivalent predicate with the exploratory rule.

37. The system of claim 34, further comprising at least one of:

    means for requesting a list of tentative substitutes with predicates that involve nested queries;
    means for including the substitutes into the query to form a new expression;
    means for simplifying the new expression;
    means for removing nested queries; and
    means for generating new alternatives for the search.

38. The system of claim 34, further comprising means for processing the original predicate to generate a residual predicate the refines the search.

39. The system of claim 38, further comprising means for processing the residual predicate after processing at least one of the implied predicate and the equivalent predicate.

**40.** The system of claim 34, further comprising means for estimating cardinality using at least one of the implied predicate and the equivalent predicate, where use of the implied predicate facilitates defining an upper bound on a number of rows that can satisfy the original predicate.

**FIG. 1**

**FIG. 3**

QUERY

RECEIVE UNMATCHED QUERY THAT IS NOT DIRECTLY SEACHABLE — 200

OPTIMIZING COMPONENT REDUCES QUERY ORIGINAL PREDICATE TO CONJUNCTS, ONE OF WHICH CAN BE USED BY COMPATIBLE RULE — 202

OPTIMIZING COMPONENT ANALYZES CONJUNCTS WITH EXISTING RULES — 204

OPTIMIZING COMPONENT RETURNS IMPLIED OR EQUIVALENT PREDICATE THAT MATCHES AN EXISTING RULE — 206

PROCESS QUERY BASED ON IMPLIED OR EQUIVALENT PREDICATE — 208

RESULTS? — 210

REFINE? — 214

PROCESS USING RESIDUAL PREDICATE — 218

ACCEPTABLE? — 216

DROP QUERY — 212

STOP

**FIG. 2**

STANDARD INDICES

RECEIVE OPTIMIZING COMPONENT — 400

BREAK ORIGINAL PREDICATE INTO CONJUNCTS — 402

ANALYZE CONJUNCTS
DURING INDEX SELECTION — 404

REQUEST FROM METADATA ENGINE AN IMPLICATION RULE
FOR GIVEN COLUMN OR FUNCTION ON GIVEN COLUMN — 406

TRANSMIT TO METADATA ENGINE EXPRESSION TO WHICH
COLUMN (OR FUNCTION ON A COLUMN) IS TO BE COMPARED — 408

TRANSMIT TO METADATA ENGINE A LIST OF
STANDARD INDICES THAT CAN BE EXPLOITED — 410

ENGINE RESPONDS WITH LIST OF TENTATIVE
SUBSTITUTES (IMPLIED COMPARISON PREDICATES) — 412

OPTIMIZING COMPONENT ATTEMPTS ADDING
IMPLIED PREDICATES TO ORIGINAL PREDICATE — 414

OPTIMIZING COMPONENT SEARCHES FOR BEST SOLUTION — 416

OPTIMIZING COMPONENT CHECKS IF GIVEN IMPLIED
PREDICATE EXPLOITS AN INDEX — 418

EXPLOIT? — 420

Y → EMPLOY PREDICATE — 424

N

OPTIMIZING COMPONENT REMOVES IMPLIED
PREDICATE TO NOT CAUSE OVERHEAD — 422

STOP

**FIG. 4**

500

502

```
PROJECT
  (ID)
    |
 SELECT
   /    \
TABLE1   EQ
        /  \
      P1    @P2
```

```
PROJECT
  (ID)
    |
 SELECT
   /    \
TABLE1   AND
        /    \
      EQ       EQ
     /  \     /    \
   P1   @P2  PrfxCompCol   Prefix (@P2, 10)
```

**FIG. 5**

600

302

| RULES COMPONENT | ↔ | METADATA ENGINE |

102

OPTIMIZING COMPONENT

QUERY → QUERY COMPONENT

EQUIVALENT PREDICATE

IMPLIED PREDICATE

PREDICATE COMPONENT

RESIDUAL PREDICATE

RULES COMPONENT — 602

DATA REPOSITORY

**FIG. 6**

MULTI-VALUED INDICES

RECEIVE OPTIMIZER — 700

BREAK ORIGINAL PREDICATE INTO CONJUNCTS — 702

ANALYZE CONJUNCTS
DURING INDEX SELECTION — 704

OPTIMIZING COMPONENT PROVIDES AD-HOC
EXPLORATORY RULES FOR INDIVIDUAL OPERATORS — 706

INDIVIDUAL CONJUNCTS ANALYZED WITH AD-HOC RULES — 708

OPTIMIZING COMPONENT ASKS ENGINE FOR RULES, BY FIRST
TRANSMITTING TO ENGINE EXPRESSION TO WHICH COLUMN
(OR FUNCTION ON A COLUMN) IS TO BE COMPARED — 710

TRANSMIT TO METADATA ENGINE LIST OF MULTI-VALUED
INDICES THAT CAN BE EXPLOITED — 712

ENGINE RESPONDS WITH LIST OF TENTATIVE SUBSTITUTES
(WITH PREDICATES INVOLVING NESTED QUERIES) — 714

OPTIMIZING COMPONENT INCLUDES SUBSTITUTES
INTO QUERY, AND SIMPLIFIES EXPRESSION — 716

OPTIMIZING COMPONENT
REMOVES NESTED QUERIES — 718

OPTIMIZING COMPONENT
GENERATES NEW ALTERNATIVES — 720

STOP

**FIG. 7**

800

RULES COMPONENT ↔ METADATA ENGINE

102

OPTIMIZING COMPONENT

QUERY → QUERY COMPONENT

QUERY COMPONENT ↕ PREDICATE COMPONENT

EQUIVALENT PREDICATE

IMPLIED PREDICATE

RESIDUAL PREDICATE

COST-BASIS OPTIMIZER — 120

CLASSIFIER — 802

DATA REPOSITORY

**FIG. 8**

FIG. 9

1000

1002
CLIENT(S)

COMMUNICATION
FRAMEWORK

1004
SERVER(S)

1006

1008
CLIENT DATA STORE(S)

1010
SERVER DATA STORE(S)

**FIG. 10**

**European Patent Office**

EUROPEAN SEARCH REPORT

Application Number

EP 05 10 1969

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 193 619 A (MICROSOFT CORPORATION) 3 April 2002 (2002-04-03)<br>* abstract *<br>* column 2, line 28 - line 53 *<br>* column 10, line 11 - line 19 *<br>* claim 8 * | 1-40 | G06F17/30 |
| A | CHAUDHURI S ET AL INSTITUTE OF ELECTRICAL AND ELECTRONICS ENGINEERS: "Efficient evaluation of queries with mining predicates" PROCEEDINGS 18TH. INTERNATIONAL CONFERENCE ON DATA ENGINEERING. (ICDE'2002). SAN JOSE, CA, FEB. 26 - MARCH 1, 2002, INTERNATIONAL CONFERENCE ON DATA ENGINEERING. (ICDE), LOS ALAMITOS, CA : IEEE COMP. SOC, US, vol. CONF. 18, 26 February 2002 (2002-02-26), pages 529-540, XP010588273 ISBN: 0-7695-1531-2<br>* page 1 - page 3 * | 1-40 | |
| A | US 6 338 056 B1 (DESSLOCH STEFAN ET AL) 8 January 2002 (2002-01-08)<br>* column 12 - column 17 * | 1-40 | TECHNICAL FIELDS SEARCHED (Int.Cl.7)<br><br>G06F |
| A | US 6 219 662 B1 (FUH GENE Y. C ET AL) 17 April 2001 (2001-04-17)<br>* column 2, line 1 - line 43 *<br>* column 5, line 1 - line 33 *<br>* column 6, line 53 - line 55 *<br>* column 7, line 49 - column 8 * | 1-40 | |

-/--

The present search report has been drawn up for all claims

| Place of search | Date of completion of the search | Examiner |
|---|---|---|
| Munich | 20 July 2005 | San-Bento Furtado, P |

EPO FORM 1503 03.82 (P04C01)

**EP 1 577 796 A1**

European Patent
Office

**EUROPEAN SEARCH REPORT**

Application Number

EP 05 10 1969

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHAUDHURI S ED - ASSOCIATION FOR COMPUTING MACHINERY: "AN OVERVIEW OF QUERY OPTIMIZATION IN RELATIONAL SYSTEMS" PROCEEDINGS OF THE 17TH. ACM SIGACT-SIGMOD-SIGART SYMPOSIUM ON PRINCIPLES OF DATABASE SYSTEMS. PODS 1998. SEATTLE, WA, JUNE 1 -3, 1998, PROCEEDINGS OF THE ACM SIGACT-SIGMOD-SIGART SYMPOSIUM ON PRINCIPLES OF DATABASE SYSTEMS, NEW YORK, NY : ACM, US, 1 June 1998 (1998-06-01), pages 34-43, XP000782631 ISBN: 0-89791-996-3 * page 41 * | 1-40 | |
| A | HELLERSTEIN J M ET AL: "PREDICATE MIGRATION: OPTIMIZING QUERIES WITH EXPENSIVE PREDICATES" SIGMOD RECORD, ASSOCIATION FOR COMPUTING MACHINERY, NEW YORK, US, vol. 22, no. 2, 1 June 1993 (1993-06-01), pages 267-276, XP000418207 * the whole document * | 1-40 | TECHNICAL FIELDS SEARCHED (Int.Cl.7) |
| A | CHAUDHURI S, SHIM K: "Optimization of Queries with User-Defined Predicates" ACM TRANSACTIONS ON DATABASE SYSTEMS, vol. 24, no. 2, June 1999 (1999-06), pages 177-228, XP002336732 * the whole document * | 1-40 | |

The present search report has been drawn up for all claims

| Place of search | Date of completion of the search | Examiner |
|---|---|---|
| Munich | 20 July 2005 | San-Bento Furtado, P |

EPO FORM 1503 03.82 (P04C01)

**EP 1 577 796 A1**

## ANNEX TO THE EUROPEAN SEARCH REPORT
## ON EUROPEAN PATENT APPLICATION NO.

EP 05 10 1969

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2005

| Patent document cited in search report | | Publication date | Patent family member(s) | | Publication date |
|---|---|---|---|---|---|
| EP 1193619 | A | 03-04-2002 | US | 6757671 B1 | 29-06-2004 |
| | | | EP | 1193619 A2 | 03-04-2002 |
| | | | JP | 2002163289 A | 07-06-2002 |
| US 6338056 | B1 | 08-01-2002 | NONE | | |
| US 6219662 | B1 | 17-04-2001 | US | 6192358 B1 | 20-02-2001 |
| | | | US | 6278994 B1 | 21-08-2001 |
| | | | US | 6253196 B1 | 26-06-2001 |
| | | | US | 6285996 B1 | 04-09-2001 |
| | | | US | 6266663 B1 | 24-07-2001 |

For more details about this annex : see Official Journal of the European Patent Office, No. 12/82